# FASCICULE DE BREVET EUROPEEN

(11) **EP 2 348 763 B1**
(45) Date de publication et mention de la délivrance du brevet: **05.01.2022**
(21) Numéro de dépôt: 11151524.3
(22) Date de dépôt: 20.01.2011
(51) Int. Cl.: H04W 12/069, H04W 12/06, H04L 29/06

(54) **PROCÉDÉ D'AUTHENTIFICATION D'UN TERMINAL MOBILE POUR ACCÉDER À UN SERVEUR D'APPLICATIONS**
Authentifizierungsverfahren eines mobilen Endgeräts für den Zugang zu einem Anwendungsserver
Method for authenticating a mobile terminal to access an application server

(30) Priorité: 21.01.2010 FR 1050403
(43) Date de publication de la demande: 27.07.2011
(73) Titulaire: SOCIETE FRANCAISE DU RADIOTELEPHONE-SFR, 75015 Paris (FR)
(72) Inventeur: Guindolet, Stéphane, 75012, Paris (FR); Marsot, Olivier, 38000, Grenoble (FR); Reisacher, Olivier, 38330, Biviers (FR); Sultan, Alexis, 75019, Paris (FR)
(74) Mandataire: Ipside

(56) Documents cités:
- "3rd Generation Partnership Project; Technical Specification Group Services and System Aspects; Liberty Alliance and 3GPP security interworking; Interworking of Liberty Alliance Identity Federation Framework (ID-FF), Identity Web Services Framework (ID-WSF) and Generic Authentication Architecture (GA", 3GPP STANDARD; 3GPP TR 33.980, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 18 décembre 2009 (2009-12-18), pages 1-39, XP050401352,
- "3rd Generation Partnership Project; Technical Specification Group Services and System Aspects; Generic Authentication Architecture (GAA); Generic bootstrapping architecture (Release 9)", 3GPP STANDARD; 3GPP TS 33.220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 18 décembre 2009 (2009-12-18), pages 1-75, XP050401341,
- "3rd Generation Partnership Project; Technical Specification Group Services and System Aspects; Generic Authentication Architecture (GAA); Support for subscriber certificates (Release 9)", 3GPP STANDARD; 3GPP TS 33.221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 30 décembre 2009 (2009-12-30), pages 1-25, XP050401742,
- "3rd Generation Partnership Project; Technical Specification Group Services and System Aspects; Generic Authentication Architecture (GAA); Access to network application functions using Hypertext Transfer Protocol over Transport Layer Security (HTTPS) (Release 9)", 3GPP STANDARD; 3GPP TS 33.222, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 30 décembre 2009 (2009-12-30), pages 1-22, XP050401743,

## Description

### Domaine de l'invention

La présente invention concerne un procédé d'authentification d'un terminal mobile pour accéder à un serveur d'applications, ainsi qu'un système correspondant, comportant un terminal mobile et un serveur d'authentification. Le domaine de l'invention est celui de l'authentification d'un terminal mobile et, plus particulièrement dans ce domaine, l'authentification du terminal mobile par l'intermédiaire d'un réseau de télécommunication autre que celui de l'opérateur dudit terminal.

### Etat de la technique

Aujourd'hui, un abonné peut accéder à un serveur d'applications par l'intermédiaire d'un réseau de télécommunication de son opérateur ou par un réseau tiers.

Le document 3GPP TS33.980 V9.0.0 décrit un UE se connectant à un fournisseur de services. Les documents 3GPP TS33.980 V9.0.0, 3GPP TS33.220 V9.2.0, 3GPP TS33.221 V9.0.0, 3GPP TS33.222 V9.0.0 mentionnent la possibilité d'obtenir un certificat et de réutiliser ce dernier.

Il est, sans ambiguïté, reconnu que l'opérateur du réseau de télécommunication mobile auquel appartient l'abonné est apte à identifier de manière forte l'abonné désirant accéder audit réseau.

Toutefois, en itinérance, l'accès au serveur d'applications de l'opérateur se fait par l'intermédiaire d'un réseau de télécommunication mobile ou sans fil inconnu à l'opérateur. Ces réseaux tiers ne permettent pas à l'opérateur de s'assurer de l'identité de la personne qui désire se connecter au serveur d'applications.

En effet, jamais un opérateur d'un réseau de télécommunication mobile tiers ne révélera sa clé secrète Ki, pas plus que les détails de son algorithme d'authentification, à qui que ce soit, fût-il un confrère.

De même, jamais un opérateur d'un réseau de télécommunication sans fil tiers ne révèlera les données d'identifications de connexion de l'usager à un fournisseur de services tiers. Le réseau sans fil tiers peut être un réseau Wi-Fi ou un réseau de télécommunication mobile 2G/3G. L'accès au serveur d'applications, en profitant, par exemple, de la bande passante WiFi, se fait par l'intermédiaire de points d'accès publics ou privés. Le point d'accès, après authentification de l'usager, lui attribue une adresse IP publique pour se connecter au serveur d'applications.

Ainsi, dès que l'accès au serveur d'applications se fait, via un réseau tiers, l'opérateur n'a aucun moyen de vérifier l'identité de l'usager puisqu'il ne connait de l'utilisateur que son adresse IP publique et qu'il ne dispose pas de moyens d'identifier cette adresse IP auprès de l'opérateur du réseau de télécommunication sans fil tiers.

Le seul moyen dont dispose l'opérateur pour identifier l'utilisateur est la procédure d'autorisation de connexion pour accéder au serveur d'applications. Cette procédure est engagée entre le téléphone mobile et ledit serveur par l'intermédiaire du réseau tiers. Il existe actuellement plusieurs procédures d'autorisation permettant au serveur d'applications d'établir ou non la connexion.

Dans une première procédure d'autorisation connue, l'accès au serveur d'applications se fait par la fourniture d'un identifiant et d'un mot de passe, moyennant un abonnement ou une carte prépayée. Le principal inconvénient de ce type d'authentification est la nécessité d'une action manuelle de l'utilisateur pouvant décourager l'usage. En outre, le manque de sécurité est un autre problème de ce type d'authentification du fait que le mot de passe est facilement partageable, transférable ou même facilement retrouvé ou deviné.

Pour améliorer la confidentialité des données véhiculées sur le réseau tiers, il est également connu d'associer à la première procédure d'authentification une méthode qui consiste à utiliser un réseau virtuel privé ou tunnel VPN (Virtual Private Network) sur la connexion du réseau tiers. A l'intérieur de ce tunnel, les données sont protégées grâce à l'utilisation de techniques de chiffrement ou d'encapsulation.

Toutefois, cette méthode présente aussi des inconvénients. En effet, l'utilisation du VPN nécessite que le réseau tiers supporte le protocole du VPN en question et requiert également un paramétrage manuel par l'utilisateur de son compte VPN. C'est également une méthode coûteuse du point de vue équipement, serveurs et licences logicielles installés sur le terminal client.

Il est également connu une deuxième procédure d'autorisation qui consiste à calculer un certificat de session, du type identifiant et un mot de passe, sur la base des identifiants d'une carte à puce du téléphone mobile comportant des données confidentielles de l'utilisateur. Toutefois, cette procédure, certes plus sécurisée, nécessite néanmoins un accès aux données de la carte SIM du téléphone, ce qui n'est pas souvent possible. En effet, il arrive que dans certains téléphones mobiles l'accès à la carte SIM est verrouillé par le fabricant dudit téléphone, lors de la conception.

Il est encore connu une troisième procédure d'autorisation qui consiste à utiliser une méthode EAP, lorsque le réseau tiers est un réseau Wi-Fi. Toutefois, cette troisième procédure d'autorisation présente des inconvénients. En effet, cette procédure nécessite que, le réseau tiers soit interconnecté avec les équipements fournisseurs de service de l'opérateur, de disposer d'équipements hardware (terminal et carte SIM) compatibles EAP SIM, en plus d'autoriser un accès à la carte SIM du téléphone.

Ces procédures d'autorisation ne sont pas des procédures d'authentification fortes qui permettent à l'opérateur de s'assurer de l'identité de l'usager de manière sure, lorsque la connexion se fait par l'intermédiaire d'un réseau tiers.

Ainsi, il existe aujourd'hui un besoin de trouver un moyen pour le fournisseur de services d'identifier de manière sure l'usager demandant accès à un serveur d'applications dudit fournisseur, quel que soit le réseau par lequel la connexion est établie et même depuis un terminal sur lequel l'accès à la carte SIM n'est pas possible.

### Exposé de l'invention

L'invention a justement pour but de répondre à ce besoin tout en remédiant aux inconvénients des techniques précédemment citées. La présente invention a donc pour objet un procédé d'authentification d'un terminal mobile pour accéder à un serveur d'applications.

L'invention propose un procédé d'identifications/authentification d'un utilisateur accédant à un serveur d'applications de l'opérateur via un réseau tiers, à l'aide d'une base de données dédiée. Cette base de données dédiée peut être une base de données du réseau existante, telle qu'un serveur du réseau, auquel on ajoute le procédé d'identifications/authentification de l'invention. Elle peut être également une nouvelle base de données rajoutée au réseau.

Avec l'invention, il est nécessaire au préalable de pouvoir disposer d'une information unique permettant d'identifier de façon certaine l'utilisateur sur le réseau de télécommunication mobile de l'opérateur validant le transport de cette information.

Le principe de fonctionnement de l'invention est le suivant. Lorsqu'une requête de connexion à un serveur d'applications de l'opérateur est émise par le terminal mobile, l'utilisateur (client de l'opérateur) est identifié et authentifié par le réseau de l'opérateur, via un identifiant unique de l'utilisateur qui est stocké sur une carte d'identifications de type module d'identifications de l'abonné, plus connu sous le nom de SIM. L'opérateur du point de vue du réseau dispose alors d'une information d'authentification, via une authentification HLR réalisée par le biais de la carte SIM.

Sur la base de cette identification réseau/authentification de l'utilisateur, le serveur d'authentification dédié récupère des données d'identifications de l'utilisateur (sans avoir eu à accéder aux informations de la carte SIM). Puis, il crée un profil de l'utilisateur comportant les données d'identifications récupérées. Ce profil comporte en outre un certificat de session généré correspondant à un couple login/mot de passe destiné à autoriser l'accès à l'application. Ce profil est mis à jour à partir des données d'une base de données centrale d'abonnés de type HLR selon les données d'identifications récupérées. L'opérateur contrôle ainsi le login/mot de passe que l'abonné ne connaît pas.

Le certificat de session est ensuite transmis par l'intermédiaire du réseau de l'opérateur au terminal de l'utilisateur. Le terminal enregistre ce certificat de session, de manière sécurisée, dans sa mémoire de données.

L'abonné n'a ainsi pas besoin de connaître le login/mot de passe et peut s'authentifier de façon transparente sur ledit serveur d'applications.

Le terminal peut maintenant se connecter au serveur d'applications, via un réseau tiers type Wi-Fi, qui nécessite normalement la connaissance et la saisie d'un login/mot de passe de façon complètement transparente à l'utilisateur.

En outre, avec l'invention, l'opérateur peut s'assurer de l'identité de l'usager par les données d'identifications récupérées, quel que soit le réseau utilisé pour accéder au serveur d'applications.

Le procédé de l'invention a donc permis de mettre au point une méthode d'authentification d'accès aux services de l'opérateur, basée non pas sur la carte SIM, mais sur les informations réseaux associées à cette carte SIM, sur la base d'une correspondance bijective entre ces deux informations.

Ce procédé d'authentification est fondé sur les données d'identifications de l'utilisateur récupérées sur le réseau de l'opérateur, sans saisie préalable par l'utilisateur d'un identifiant/mot de passe.

Plus précisément, l'invention est définie par les revendications en annexe.

### Brève description des dessins

L'invention sera mieux comprise à la lecture de la description qui suit et à l'examen des figures qui l'accompagnent. Celles-ci ne sont présentées qu'à titre indicatif et nullement limitatif de l'invention.
La figure 1 montre une représentation schématique des entités qui interviennent dans un procédé de génération et de distribution d'un certificat de session à un terminal mobile, par l'intermédiaire d'un réseau de l'opérateur, pour accéder à une application selon un mode de réalisation de l'invention.
La figure 2 montre une représentation schématique d'une architecture du serveur d'applications selon un mode de réalisation de l'invention.
La figure 3 montre une représentation schématique d'une architecture du serveur d'authentification selon un mode de réalisation de l'invention.
La figure 4 montre une illustration d'étapes du procédé de fonctionnement selon un mode de réalisation de l'invention.
Les figures 5 et 6 montrent des exemples d'utilisation du procédé d'authentification de l'invention.

### Description détaillée de modes de réalisation de l'invention

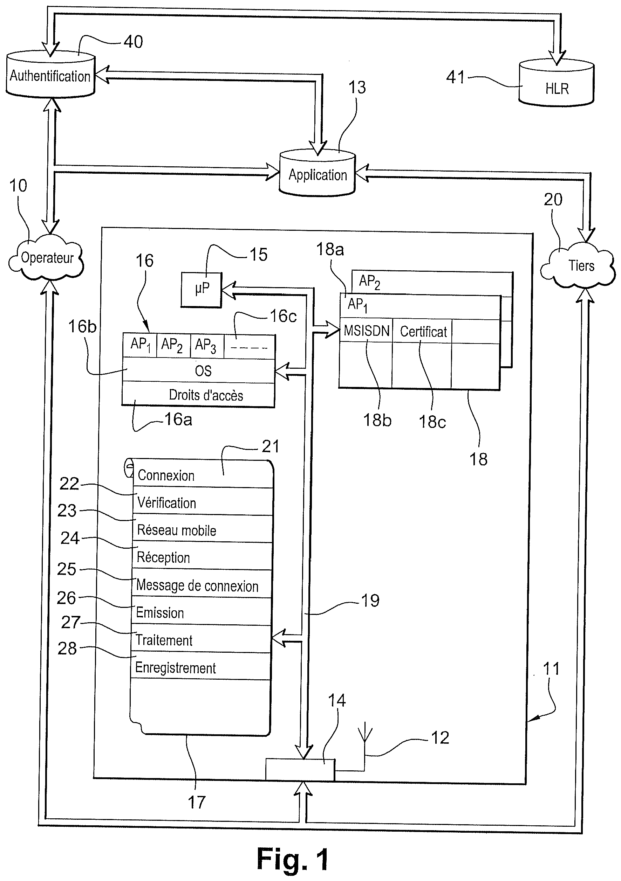

La figure 1 montre un terminal 11 mobile d'un utilisateur en liaison avec un réseau 10 d'un opérateur de téléphonie mobile auquel est abonné l'utilisateur. Dans l'exemple de la figure 1, le terminal 11 mobile est un téléphone mobile. Le terminal 11 pourrait aussi être un ordinateur individuel, un assistant personnel, une tablette, un livre électronique ou tout autre dispositif équivalent ayant une connectivité à un réseau de télécommunication mobile et apte à se connecter à un réseau de télécommunication tiers tel qu'un réseau sans fil. Le téléphone 11 comporte une antenne 12 lui permettant d'effectuer une liaison radioélectrique avec le réseau 10.

Dans un mode de réalisation, lorsque le terminal 11 est un dispositif autre qu'un téléphone mobile, il peut être connecté à un modem de télécommunication mobile destiné à connecter ledit terminal au réseau 10 de télécommunication mobile de l'opérateur. Dans ce cas, le modem comporte une antenne et un compartiment dans lequel est insérée la carte SIM. Les pilotes et les programmes de fonctionnement du modem sont préinstallés dans une mémoire programme dudit modem. Au branchement sur le terminal 11, le modem est reconnu comme un lecteur amovible et un microprocesseur du modem exécute le programme, installe le pilote et ensuite demande le code PIN de la carte SIM. Le programme dispose déjà des paramètres pour la connexion au réseau et choisit automatiquement le réseau le plus rapide (2G ou 3G).

Le réseau 10 n'est pas montré en détail. Pour la description, on considère que le réseau 10 comporte tous les éléments nécessaires permettant, par exemple, au téléphone 11 de se connecter à un serveur 13 d'applications. Ainsi le réseau 10 comporte, entre autres, une station de base à laquelle est connecté le téléphone 11 ainsi que tous les équipements permettant de raccorder la station de base au serveur 13 d'applications.

Dans la description, on a choisi la norme GSM pour le réseau 10 de télécommunication mobile de l'opérateur, mais il pourrait s'agir d'une autre norme, comme le PCS, le DCS, l'UMTS ou toutes autres normes radioélectriques existantes et/ou à venir comportant un système d'authentification basé sur une carte SIM et mettant à disposition une information d'authentification réseau.

Le téléphone 11 comporte des circuits électroniques 14 connectés à l'antenne 12. Le rôle des circuits 14 est d'assurer l'interface radio entre le téléphone 11 et le réseau 10. Les circuits 14 d'interface réalisent la conversion entre les signaux du bus 19 interne du terminal 11 et les signaux reçus/émis via l'antenne 12.

Ces circuits 14 sont donc une interface radioélectrique permettant au terminal 11 de communiquer sur le réseau 10 de téléphonie mobile de l'opérateur ou sur un réseau tiers 20 de télécommunication mobile.

Le réseau tiers 20 peut également être un réseau de télécommunication sans fil. Dans ce cas, le terminal 11 est muni d'un adaptateur (non représenté) intégré ou non lui permettant de se connecter audit réseau sans fil.

Le réseau de télécommunication sans fil peut être un réseau local sans fil utilisant la bande de fréquence des 2,4 GHz permettant un débit de 11 Mb/s ou la bande de fréquence des 5 GHz permettant un débit de 54 Mb/s. Il existe plusieurs normes Wi-Fi utilisant des canaux de transmission différents tels que :
- le Wi-Fi 802.11a permettant d'obtenir un débit théorique de 54 Mbps (30 Mbps réels)
- le Wi-Fi 802.11b permettant d'obtenir un débit théorique de 11 Mbps (6 Mbps réels) avec une portée pouvant aller jusqu'à 300 mètres dans un environnement dégagé.
- le Wi-Fi 802.11g permettant d'obtenir un débit théorique de 54 Mbps (30 Mbps réels) sur la bande de fréquence des 2.4 GHz.

Le réseau de télécommunication sans fil peut être également un réseau local sans fil selon la technologie d'accès Wimax utilisant la bande de fréquence située entre 2 et 66 GHz permettant d'obtenir un débit pouvant s'élever dans des conditions optimales jusqu'à 70 Mbit/s, sur une distance pouvant théoriquement atteindre 70 kilomètres.

Via ces circuits 14, le terminal 11 est donc apte à communiquer sur un réseau de type Internet et donc apte à atteindre ou être atteint par n'importe quel serveur 13 d'applications de l'opérateur connecté à ce réseau.

Le téléphone 11 comporte une carte SIM (Subscriber Identity Module) non représentée comportant des données permettant d'identifier l'usager de façon unique. Chaque carte SIM possède un numéro d'identifications unique et secret appelé IMSI (*International Mobile Subscriber Identity*). Ce numéro d'identifications peut être protégé à l'aide d'une clé de 4 chiffres composant le *code PIN.* La carte SIM comporte également le numéro du mobile correspondant au MSISDN (Mobile Subscriber Integrated Services Digital Number). Les données d'identifications contenues dans cette carte SIM permettent au réseau 10 de l'opérateur d'identifier chaque utilisateur, indépendamment du terminal 11 utilisé, lors de la communication avec une station de base.

Le terminal 11 comporte aussi une unité de traitement comportant en particulier, mais de manière non limitative, un microprocesseur 15, une mémoire 16 de programme, une mémoire 18 de données et une mémoire 17 d'instructions. Les éléments 15 à 18 sont interconnectés par le bus 19.

La mémoire 16 est une mémoire dite programme incluant généralement un système d'exploitation et des algorithmes d'applications. Pour mieux comprendre l'invention, on a découpé la mémoire 16 en trois zones. Une zone 16a de vérification des droits d'accès, une zone 16b de système d'exploitation et plus particulièrement de gestion de l'accès aux applications et une zone 16c d'applications utilisables par le terminal 11.

La mémoire 18 de données est une mémoire qui comporte, notamment pour chaque application, un certificat d'autorisation de connexion fourni par le réseau 10 de l'opérateur.

La représentation des mémoires du terminal 11 n'est qu'une illustration d'implantation de composants et d'enregistrement de données. Dans la pratique, ces mémoires sont unifiées ou distribuées selon des contraintes de taille de la base de données et/ou de rapidité des traitements souhaités.

Dans la description, on prête des actions à des appareils ou à des programmes, cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en oeuvre les moyens de l'appareil et donc de réaliser l'action entreprise.

La mémoire 17 d'instructions de programmes est divisée en plusieurs zones, chaque zone correspondant à une fonction ou à un mode de fonctionnement du programme du procédé de l'invention. De même, lorsque l'on prête une action à un programme, cette action correspond à la mise en œuvre par un microprocesseur, connecté à une mémoire dans laquelle est enregistré le programme, de tout ou partie des codes instructions formant ledit programme.

Seules les zones de la mémoire 17 intéressant le plus directement l'invention sont représentées.

Une zone 21 comporte des codes instructions pour recevoir et traiter une requête de connexion au serveur d'applications 13. Cette requête est transmise à l'unité de traitement en conséquence d'une validation par l'utilisateur de cette saisie, en cliquant, par exemple, sur une icône de l'application visualisée sur une interface de saisie du terminal 11. Une zone 22 comporte des codes instructions pour déclencher une opération de vérification d'une association d'un certificat d'autorisation de session à l'application dans la mémoire de données 18. Cette opération de vérification consiste à passer systématiquement en revue des données de la mémoire de données 18 afin de rechercher le certificat de session attribué à l'application.

Une zone 23 comporte des codes instructions pour élaborer une requête d'obtention d'un certificat de session. Les codes instructions de la zone 23 sont exécutés, lorsque les codes instructions de la zone 22 retournent une réponse du type «vérification négative», correspondant au cas où aucun certificat de session n'est associé à l'application. Les codes instructions de la zone 23 déclenchent une connexion du terminal 11 au réseau 10 de télécommunication mobile de l'opérateur et émettent cette requête à destination d'un serveur d'authentification 40 par l'intermédiaire du réseau 10 mobile.

Une zone 24 comporte des codes instructions pour recevoir du serveur d'authentification 40, par l'intermédiaire du réseau 10, un certificat d'autorisation de session. Les codes instructions de la zone 24 sont également aptes à enregistrer dans la mémoire de données ledit certificat de session reçu.

Une zone 25 comporte des codes instructions pour produire un message de connexion au serveur d'applications 13 comportant éventuellement le certificat d'autorisation de session enregistré. Une zone 26 comporte des codes instructions pour transmettre au serveur 13 d'applications, par l'intermédiaire du réseau 10 mobile ou du réseau tiers 20, le message de connexion.

Une zone 27 comporte des codes instructions pour traiter le résultat retourné en réponse au message de connexion émis. Lorsque le résultat comporte un message du type «échec de connexion» ou «certificat d'autorisation de session non valide», les codes instructions de la zone 27 exécutent ceux de la zone 23. Dès réception du nouveau certificat d'autorisation de session, des codes instructions d'une zone 28 suppriment de la mémoire de données l'ancien certificat de session et enregistrent à la place le nouveau certificat reçu. Puis, ils élaborent un nouveau message de connexion qu'ils émettent à destination du serveur 13 d'applications, par l'intermédiaire du réseau 10 mobile ou du réseau tiers 20.

Lorsque le résultat comporte un message du type «connexion réussie», les codes instructions de la zone 27 traitent les flux de données reçues du serveur 13 d'applications. Un flux est une pluralité de messages selon un protocole réseau. Ces messages sont cohérents du point de vue des données qu'ils comportent. C'est-à-dire, par exemple, qu'ils correspondent tous à une même requête, ou qu'ils correspondent tous à une réponse à une requête.

Le procédé de l'invention est un logiciel qui peut être réalisé sous forme d'une application à télécharger sur le terminal 11. Dans ce cas, l'application téléchargée commande l'exécution des codes instructions de la mémoire 17 en assurant la gestion des travaux, les opérations d'entrée-sortie sur les périphériques, l'affectation des ressources aux différents processus, l'accès aux bibliothèques de programmes et aux fichiers, ainsi que la comptabilité des travaux.

Pour télécharger le logiciel du procédé de l'invention sur le terminal 11, l'opérateur du réseau met à disposition de l'utilisateur une application correspondant audit logiciel. Cette mise à disposition peut être un SMS envoyé par l'opérateur au terminal 11 mobile et comportant un lien de téléchargement de l'application depuis une source dudit opérateur. Cette mise à disposition peut être un lien de téléchargement de l'application accessible à partir du site Internet de l'opérateur. En cliquant sur ce lien de téléchargement, l'utilisateur peut installer l'application sur le terminal 11 mobile.

Dans une variante, le logiciel est intégré au système d'exploitation qui commande l'exécution des codes instructions de la mémoire 17.

Dans une variante, le logiciel du procédé de l'invention est téléchargé dans le terminal 11 mobile au moment de sa fabrication.

Dans une autre variante, le logiciel est exécuté partiellement par l'application téléchargée et par le système d'exploitation, selon une configuration prédéfinie. Dans un exemple de configuration, l'application exécute les commandes de réception du certificat de session et de son enregistrement et le système d'exploitation exécute le reste des commandes de la mémoire 17. Dans un autre exemple de configuration, le système d'exploitation détecte les points d'accès compatibles et l'application exécute le reste des commandes de la mémoire 17.

La mémoire de données 18 est, par exemple, structurée en une table. Par exemple, chaque ligne de la table correspond à une application, chaque colonne de la table correspond à un renseignement sur cette application. Ainsi la mémoire 18 de données comporte une ligne 18a correspondant à une application AP1, une colonne 18b correspondant aux données d'identifications du terminal 11 récupérées sur le réseau 10 mobile, une colonne 18c correspondant au certificat d'autorisation de session reçu et associé aux données d'identifications.

Dans un mode de réalisation, plusieurs applications distinctes peuvent partager une ou plusieurs colonnes.

La connaissance de l'application activée permet d'extraire de la table 18 le certificat de session correspondant et les données d'identifications associées.

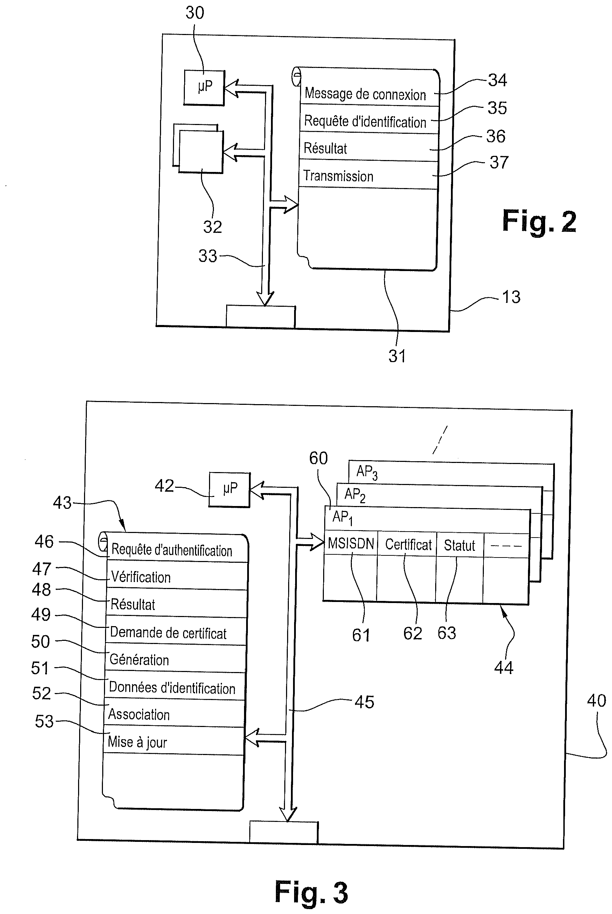

La figure 2 montre une représentation schématique d'une architecture du serveur d'applications 13. Le serveur d'applications 13 comporte un microprocesseur 30, une mémoire de programme 31 et une mémoire de données 32 connectés à un bus bidirectionnel 33.

La mémoire de programme 31 comporte une zone 34 comportant des codes instructions pour recevoir du terminal 11 un message de connexion. La mémoire de programme 31 comporte une zone 35 comportant des codes instructions pour élaborer et transmettre, à destination du serveur 40 d'authentification, une requête d'authentification du terminal 11 ayant émis le message de connexion. La mémoire de programme 31 comporte une zone 36 comportant des codes instructions pour traiter le résultat retourné en réponse à la requête d'authentification émise. Les codes instructions de la zone 36 transmettent le résultat retourné au terminal 11 en réponse au message de connexion.

La mémoire de programme 31 comporte une zone 37 comportant des codes instructions pour autoriser l'établissement d'une connexion entre le serveur 13 d'applications et le terminal 11, lorsque le résultat comporte un message du type «authentification réussie».

Le serveur d'applications 13 peut être notamment un serveur de connexion à Internet via le réseau sans fil, un serveur de télévision, un serveur de localisation géographique du terminal, un serveur de télévision cryptée ou, d'une façon générale, tout serveur d'applications qui nécessite une authentification et même un cryptage des données, interconnecté avec un serveur d'authentification 40 dédié, apte à vérifier la cohérence des éléments d'authentifications fournis.

La figure 3 montre une représentation schématique d'une architecture du serveur d'authentification 40. Le serveur d'authentification 40 assure l'authentification des abonnés de l'opérateur préalablement à toute communication entre le serveur d'applications 13 et le terminal 11.

Le serveur d'authentification 40 coopère avec un enregistreur 41 de localisation nominal HLR relié à des commutateurs de services mobiles à travers le réseau de signalisation du réseau 10 de radiotéléphonie de l'opérateur.

L'enregistreur 41 HLR est un équipement important du réseau 10 de l'opérateur, qui officie en tant que base de données centrale contenant l'ensemble des données relatives à chacun des abonnés autorisés à utiliser le réseau 10 mobile. Afin que les données soient cohérentes sur l'ensemble du réseau, c'est elle qui sert de référence aux autres bases de données locales du réseau, telle que le serveur d'authentification 40.

La base de données centrale est automatiquement remplie, lors de l'inscription d'un nouvel abonné auprès d'un opérateur de téléphonie. Le système d'information commerciale (SIC), à partir duquel le service commercial procède à l'inscription contractuelle du nouvel abonné, met à jour la base de données HLR avec les nouvelles données saisies, notamment l'attribution d'identifiants de l'abonné (IMSI et MSISDN). Ce remplissage de la base de données HLR est toujours à l'initiative du système d'information SIC.

L'enregistreur HLR comporte ainsi notamment pour chaque terminal l'identité internationale IMSI de la carte USIM insérée dans le terminal, c'est-à-dire de l'abonné possesseur de la carte USIM, le numéro d'annuaire et le profil d'abonnement de l'abonné.

Le serveur d'authentification 40 comporte un microprocesseur 42, une mémoire de programme 43 et une mémoire de données 44 connectés à un bus bidirectionnel 45.

La mémoire 43 de programme est divisée en plusieurs zones, chaque zone correspondant à une fonction ou à un mode de fonctionnement du programme du serveur 40 d'authentification.

Une zone 46 comporte des codes instructions pour recevoir du serveur 13 d'applications une requête d'authentification. Une zone 47 comporte des codes instructions pour déclencher une procédure d'autorisation de connexion. Cette procédure d'autorisation exécute une opération de vérification du certificat d'autorisation de session. Cette opération de vérification consiste à passer systématiquement en revue des données de la mémoire de données 44 afin de rechercher le certificat de session associé à l'application. Puis ils vérifient la concordance entre le certificat de session enregistré dans la mémoire de données 44 et celui contenu dans la requête d'authentification.

Une zone 48 comporte des codes instructions pour élaborer un résultat d'autorisation positive de connexion au serveur d'applications 13 comportant l'application activée, si la demande d'authentification du terminal 11 est satisfaite. Dans le cas contraire, la demande d'authentification échoue et les codes instructions élaborent un résultat d'autorisation négative et l'abonné ne peut accéder au serveur 13 d'applications.

Une zone 49 comporte des codes instructions pour recevoir du terminal 11, via le réseau 10 de l'opérateur, une requête d'obtention d'un certificat de session. Une zone 50 comporte des codes instructions pour générer un certificat de session à l'aide d'un générateur de mot de passe et lorsque le terminal 11 est authentifié par le réseau 10 mobile.

Dans un mode de réalisation le générateur est de préférence aléatoire. Il crée des certificats de session selon différents critères de sélection prédéfinis comme notamment
- le choix des caractères composant le certificat de session tel que l'utilisation des majuscules, minuscules, symboles et/ou chiffres, l'alternance de ces caractères étant obtenue de façon aléatoire,
- la taille du certificat de session correspondant au nombre de caractères.

Une zone 51 comporte des codes instructions pour récupérer du réseau 10 mobile des données d'identifications du terminal 10. Ces données d'identifications peuvent être entre autres le MSISDN, l'IMSI et/ou le TMSI. Une zone 52 comporte des codes instructions pour créer et enregistrer dans la mémoire de données 44 un profil d'authentification du terminal 11 par rapport à l'application.

Une zone 53 comporte des codes instruction pour évaluer une condition de mise à jour du profil d'authentification du terminal 11.

La mémoire de données 44 est, par exemple, structurée en une table. Par exemple, chaque ligne de la table correspond à une application, chaque colonne de la table correspond à un renseignement sur cette application. Ainsi, la mémoire 44 de données comporte une ligne 60 correspondant à une application AP1, une colonne 61 correspondant aux données d'identifications du terminal 11 récupérées sur le réseau 10 mobile, une colonne 62 correspondant au certificat d'autorisation de session généré et associé aux données d'identifications, une colonne 63 correspondant à un statut indiquant l'état d'abonnement de l'utilisateur à ladite application AP1.

La connaissance des données d'identifications permet d'extraire de la table 44, pour une application donnée, le profil d'authentification correspondant au certificat de session et au statut.

Le statut de la colonne 63 est mis à jour par les codes instructions de la zone 53. L'état du statut peut être actif, résilié ou suspendu. Dans un mode de réalisation préféré, la condition de mise à jour du statut est synchrone. Dans ce cas, elle est planifiée temporellement, par exemple toutes les six heures, par un superviseur du réseau. Cette condition de mise à jour synchrone est par exemple, d'une part une vérification du profil de l'utilisateur par l'intermédiaire de l'enregistreur 41 HLR correspondant notamment à la liste des services auxquels a droit l'utilisateur et d'autre part, une mise à jour du profil d'authentification en fonction du résultat de la vérification.

Le serveur d'authentification 40 reçoit ainsi à un intervalle de temps prédéfini la mise à jour (ajout ou suppression) des utilisateurs autorisés à utiliser un service donné.

Dans une variante, la condition de mise à jour du statut est asynchrone, du type modification manuelle du statut. Cette modification du statut de l'application peut être effectuée par un administrateur (salarié de l'opérateur), via une interface homme machine.

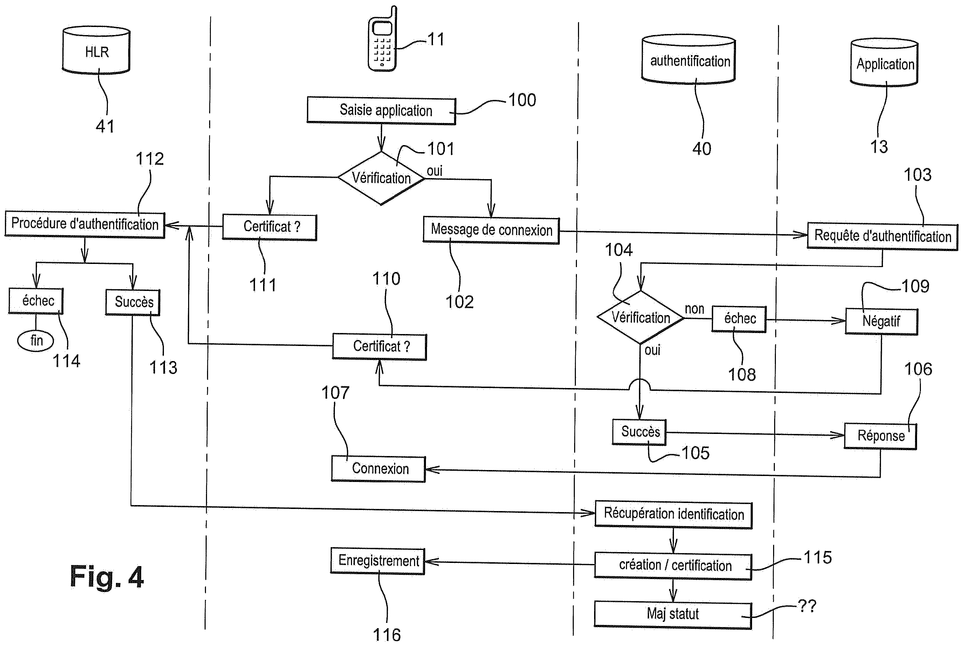

La figure 4 montre une illustration d'étapes de fonctionnement du procédé, selon un mode de réalisation de l'invention. La figure 4 montre une première étape préliminaire 100 dans laquelle l'unité de traitement du terminal 11 reçoit une requête de connexion au serveur d'applications 13. Cette requête correspond à une saisie et validation de l'application correspondante sur l'interface de saisie du terminal 11.

A une étape 101, l'unité de traitement déclenche une opération de vérification de l'enregistrement d'un certificat d'autorisation de connexion pour ladite application enregistrée dans la mémoire de données 18.

Dans le cas où l'opération de vérification retourne «aucun certificat détecté», le terminal 11 ouvre une session de connexion au réseau 10 mobile. A une étape 111, le terminal 11 élabore et transmet une requête d'initialisation du certificat de session correspondant à une requête d'obtention d'un certificat de session à destination du serveur d'authentification 40, par l'intermédiaire du réseau 10 mobile de l'opérateur.

Dans le cas où l'opération de vérification retourne «vrai», l'unité de traitement détermine la partie de la mémoire 18 de données concernée par la requête d'interrogation «vrai», c'est-à-dire la colonne 18c de la mémoire comportant ledit certificat.

Puis, à une étape 102, l'unité de traitement élabore un message de connexion et le transmet au serveur d'applications 13. Le message de connexion comporte notamment un champ comportant une commande de connexion au serveur 13 d'applications. Il peut comporter en outre un deuxième champ indiquant l'adresse du terminal 11 prélevée dans la colonne 18b de la mémoire 18 de données. Un troisième champ du message de connexion peut également indiquer le certificat d'autorisation de connexion prélevé à la colonne 18c de la mémoire 18 de données.

Lorsque le serveur 13 d'applications reçoit le message de connexion, il élabore, à une étape 103, une requête d'authentification à destination du serveur d'authentification 40 comportant notamment les données du message de connexion.

A une étape 104, le serveur d'authentification vérifie les données d'authentification du terminal 11 contenues dans le message de connexion. A partir de l'identifiant du terminal 11, le serveur extrait de sa mémoire 44 de données le certificat d'autorisation de session et le statut de l'état d'abonnement à l'application.

Dans une opération de vérification, le serveur 40 compare le certificat de session du message de connexion à celui extrait de la mémoire. En cas de correspondance positive, l'état du statut est vérifié. Si l'état du statut est actif, le serveur 40 élabore, à une étape 105, un résultat d'authentification positif et le transmet au serveur d'applications en réponse à la requête d'authentification.

Dans une variante, un compteur à rebours est activé avec un temps maximum pour terminer l'authentification du client. Si un client n'a pas terminé le protocole d'authentification dans ce délai, le serveur d'authentification 40 rompt la connexion. Ceci protège le serveur 40 des éventuels clients bloqués occupant une connexion indéfiniment. Dans un exemple la valeur par défaut du temps maximum est de 60 secondes.

A une étape 106, à réception de ce résultat positif, le serveur d'applications 13 élabore une réponse positive au message de connexion autorisant le terminal 11 à se connecter au serveur d'applications 13.

A une étape 107, à réception de cette réponse positive, le terminal 11 peut accéder au serveur 13 d'applications et communiquer avec ce dernier afin de recevoir des flux de données.

En cas de correspondance négative entre le certificat du message de connexion et celui enregistré dans le serveur 44 d'authentification, ledit serveur élabore, à une étape 108, un résultat d'authentification négatif et le transmet au serveur 13 d'applications en réponse à la requête d'authentification.

A une étape 109, à réception de ce résultat négatif, le serveur d'applications 13 élabore une réponse négative au message de connexion interdisant au terminal 11 d'accéder à ses ressources.

A une étape 110, à réception de cette réponse négative le terminal 11 élabore et transmet une requête d'obtention d'un nouveau certificat de session à destination du serveur d'authentification 40 par l'intermédiaire du réseau 10 mobile de l'opérateur.

Dès que le serveur 40 reçoit la requête d'initialisation de l'étape 111 ou d'obtention d'un nouveau certificat à l'étape 110, le réseau 10 déclenche une procédure d'authentification, à une étape 112. Cette procédure d'authentification est déclenchée par le réseau pour identifier la carte SIM du terminal 11. La procédure d'authentification dans le réseau 10 de téléphonie mobile est effectuée, de préférence, selon la norme 3GPP. La carte SIM stocke l'identité de son utilisateur (IMSI) et met en œuvre un algorithme d'authentification associé à une clé secrète Ki. La communication entre le terminal 11 et le serveur HLR de l'opérateur du réseau se fait par l'intermédiaire d'une station de base BTS (2G) ou Node B (3G). La procédure d'authentification est établie entre la carte USIM et la base de données 41 centrale HLR.

L'authentification du terminal 11 sur le réseau 10 de téléphonie mobile est effectuée afin de vérifier, de manière sure, l'identité de l'utilisateur.

A une étape 113, lorsque la demande d'authentification de l'abonné est satisfaite, le serveur d'authentification 40 récupère les données d'identifications du terminal 11. Ces données d'identifications peuvent être prélevées à partir de l'entête des paquets de données transitant entre le réseau 10 mobile et le terminal 11. Puis, le serveur d'authentification 40, à une étape 115, crée un certificat de session et l'enregistre dans sa mémoire de données en association avec les données d'identifications prélevées. Si un certificat de session était déjà enregistré, le serveur d'authentification 40 le supprime et enregistre à sa place le dernier certificat généré.

Ainsi, avec l'invention, si l'utilisateur change de terminal 11 en utilisant la même carte SIM, la requête d'initialisation, de l'étape 111, du certificat de session est élaborée et transmise à destination du serveur d'authentification 40, par l'intermédiaire du réseau 10 mobile de l'opérateur.

Le serveur d'authentification crée un nouveau certificat de session, conformément à l'étape 112. Puis, il invalide l'ancien certificat de session et enregistre à la place le nouveau créé. Ce mécanisme permet à l'opérateur d'interdire le partage d'applications entre des abonnés. En effet, un seul login/mot de passe est valide par abonné (correspondance bijective SIM et donc MSISDN) à un instant t donné.

Ce certificat de session est un code d'authentification pouvant être des identifiants et mots de passe, une clé de chiffrement, une clé de cryptage ou autres...

Le serveur d'authentification 40 transmet au terminal 11, en réponse à la requête d'obtention, le certificat d'autorisation de session créé. A une étape 116, le terminal 11 enregistre dans la colonne 18c de la mémoire de données 18 de l'application correspondante, le certificat de session reçu.

Dans un mode de réalisation préféré, le certificat de session est crypté avec une clé de chiffrement connu du serveur d'authentification 40. Dans un mode de réalisation, le certificat de session peut en outre être enregistré dans un fichier crypté du terminal 11 ou dans une «keychain».

Dans le cas contraire, la demande d'authentification, à une étape 114 échoue et l'abonné ne peut utiliser son terminal 11 pour se connecter au réseau 10 mobile.

Tant que la carte SIM n'est pas authentifiée par le réseau 10 mobile, le serveur d'authentification 40 ne peut pas créer le certificat de session permettant au terminal 11 d'accéder au serveur d'applications 13.

L'invention permet ainsi à l'opérateur de s'assurer de l'identité de tout accédant à un de ses services quel que soit le réseau utilisé pour se connecter à ces services.

L'invention permet ainsi la mise en œuvre d'une méthode d'authentification :
- fiable, c'est-à-dire comportant un login et un mot de passe complexe, non connus de l'utilisateur et interdisant tout échange de mot de passe entre utilisateurs,
- transparente, c'est-à-dire sans saisie par l'utilisateur d'un login ou d'un mot de passe, afin de proposer un parcours client similaire à celui d'une utilisation en présence d'un réseau 10 mobile,
- portable sans distinction de système d'exploitation, c'est-à-dire pouvant être utilisée sous les différents terminaux existants, compatible avec les différents réseaux Wi-Fi disponibles.
- pouvant fonctionner sur un terminal dont le système d'exploitation n'autorise pas d'accès aux données de la carte SIM.

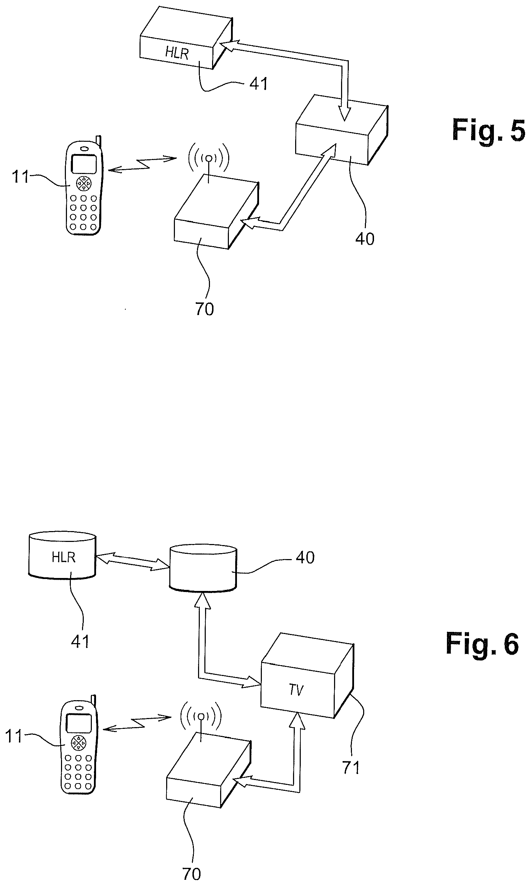

Dans les exemples illustrés dans le figures 5 et 6, le terminal 11 est un terminal de communication qui intègre un assistant numérique personnel pour former un outil de communication hybride, capable de transmettre la parole et de traiter, d'envoyer ou de recevoir des données. Ce type de terminal est plus connu sous le nom anglais de «Smartphone». Ce type de terminal 11 propose aux utilisateurs des capacités fonctionnelles et techniques accrues, leur permettant d'accéder à des services du type télévision, vidéo à la demande, etc..

La figure 5 montre un exemple de réalisation du procédé de l'invention, lorsque l'application est d'accéder à un réseau Wi-Fi par l'intermédiaire d'un point d'accès 70 interconnecté avec le serveur d'authentification 40.

Le terminal 11 intelligent est connecté au réseau 10 mobile de l'opérateur pour bénéficier de ces services. Néanmoins, l'utilisation de services à valeur ajoutée est extrêmement consommatrice en bande passante, d'où un coût de service impacté potentiellement élevé pour l'utilisateur ou pour l'opérateur, selon les forfaits choisis.

En outre, le réseau 10 de télécommunication mobile n'est pas adapté pour des volumes de données importantes car le temps entre une demande et sa latence est très élevée, de l'ordre de 500 ms (moins de 50 ms en Wi-Fi).

Compte tenu du coût de production du Mégaoctet via le réseau mobile, le volume de données octroyé par l'opérateur à l'utilisateur est une limite importante. En effet, impossible par exemple de télécharger de la musique ou de faire de la vidéo à la demande, la limite étant vite atteinte.

Pour permettre aux utilisateurs de profiter de ces nouvelles fonctionnalités, la plupart des terminaux 11 de type Smartphone sont équipés d'un adaptateur permettant aux utilisateurs d'accéder aux services de l'opérateur via un réseau Wi-Fi. Pour ce faire, les opérateurs de téléphonie mobile ont mis en place des points 70 d'accès publics dans des lieux publics tels que les hôtels, gares, aéroports, cafés, centres de conférences, galeries marchandes, c'est-à-dire dans des lieux à très forte fréquentation.

Avec ces nouveaux terminaux, Il est ainsi possible aux usagers de profiter de la bande passante Wi-Fi par l'intermédiaire de ces points 70 d'accès publics afin d'accéder depuis ledit terminal à une messagerie, au réseau Internet, ou à des applications partagées.

De par sa nature (réseaux publics), le réseau WiFi ne permet pas une authentification sécurisée native, pré-requise pour la commercialisation de service à valeur ajoutée, type télévision sur mobile, vidéo à la demande, jeux en lignes, musique, etc..

L'invention permet au point 70 d'accès compatible d'authentifier le terminal 10 avant toute association. Un point d'accès est compatible lorsqu'il est interconnecté avec le serveur d'authentification 40. Dans un exemple, un point d'accès 70 compatible est un point d'accès appartenant à l'opérateur de téléphonie mobile du terminal 11. Le terminal 11 détecte un point d'accès 70 compatible sur la base de critères tels que :
- le nom du réseau sans fil ou SSID,
- le support de transport du login/mot de passe du fournisseur d'accès à Internet (WISPr) en détectant les balises XML du WIPSr,
- sur tout ou partie de l'URL retournée par WISPr,
- sur le http/https, et/ou
- le certificat ssl pour https.

Si le terminal 11 détecte un point d'accès 70 compatible, il peut tenter la connexion à Internet avec le certificat de session obtenu en utilisant le protocole WISPr.

Pour ce faire, lors d'une première requête d'association au point d'accès 70 compatible, une connexion entre le terminal 11 et le serveur 40 d'authentification est effectuée par l'intermédiaire du réseau 10 mobile. Une analyse de l'identifiant natif du terminal récupéré (MSISDIN) est effectuée par le serveur d'authentification 40. Si l'identifiant a droit à cette application, à l'aide de l'enregistreur, le serveur d'authentification 40 initialise un couple de login/mot de passe et le transmet au terminal 11 pour mémorisation et utilisation ultérieure sur un point d'accès 70 compatible.

Dans le cadre d'autorisation d'un accès auprès du point d'accès 70, le terminal 11 adresse audit point d'accès 70 le certificat de session correspondant au login et mot de passe obtenus. Ce login est ensuite transmis à la base de données 40 par le point d'accès 70 pour valider la cohérence.

Tant que le terminal 11 n'est pas authentifié, il ne peut pas avoir accès au réseau sans fil Wi-Fi, seuls les échanges liés au processus d'authentification sont relayés vers le serveur d'authentification 40 par le point d'accès 70. Si la demande d'authentification du terminal 11 est satisfaite, le point d'accès 70 laisse passer le trafic lié audit terminal. Le processus d'authentification se déroule entre le terminal 11 et le serveur d'authentification 40, le point d'accès 70 se comportant comme un relais entre ces deux entités.

Dans le cas contraire, la demande d'authentification échoue et l'abonné ne peut accéder au réseau sans fil et éventuellement à un service demandé via ledit réseau sans fil.

Avec l'invention, si la connexion au point d'accès 70 échoue parce que le certificat de session n'est plus valide, le terminal peut récupérer de façon complètement transparente un nouveau certificat de session par l'intermédiaire du réseau 10 de l'opérateur mobile.

Grâce à l'invention, le serveur d'authentification 40 peut décider de révoquer à tout moment les certificats de session existants et de les remplacer, le mécanisme global restant entièrement transparent pour l'utilisateur final.

L'invention permet ainsi de rendre l'authentification sous un réseau IP public aussi transparente à l'utilisateur que l'authentification sous un réseau 2G ou 3G. En outre, le niveau de sécurisation de l'authentification sous les réseaux IP publics est renforcé du fait que le profil d'authentification est créé par le serveur d'authentification 40, à partir de données d'identifications issues du réseau 2G ou 3G connu de l'opérateur du terminal 11.

Le procédé d'authentification de l'invention peut être utilisé en complément d'une authentification EAP. Par exemple, lorsque l'authentification du terminal 11 n'est pas possible selon le protocole EAP, du fait d'une panne du serveur d'authentification EAP, le procédé d'authentification de l'invention peut être exécuté.

Dans un mode de réalisation dont un exemple est illustré à la figure 6, l'utilisateur souhaite accéder à des services à valeur ajoutée au travers d'un réseau tiers. Dans ce cas, le terminal 11 adresse directement son certificat de session correspondant au login et mot de passe obtenus au serveur d'applications 13 correspondant aux services à valeur ajoutée. Ce dernier effectue ensuite la vérification auprès du serveur d'authentification 40. Le service demandé peut être la télévision, le téléchargement de musique ou autres. Le serveur d'applications 13 transfère ensuite les données d'identifications obtenues au serveur d'authentification 40.

Le serveur d'authentification 40 procède à l'analyse de ces données d'identifications et vérifie la cohérence :
du login/mot de passe
du couple service demandé/adresse IP selon des potentielles restrictions de services.

La figure 6 montre un exemple de réalisation du procédé de l'invention, lorsque l'application est un service de télévision. Dans l'exemple de la figure 6, le terminal 11 accède au serveur de télévision 71 par l'intermédiaire d'un réseau sans fil inconnu de l'opérateur. De ce fait, le point d'accès 70 n'est pas interconnecté avec le serveur d'authentification 40. Il est considéré comme incompatible.

Dans l'exemple de la figure 6, les identifiant et mot de passe pour accéder au serveur de télévision 71 sont créés et enregistrés dans le serveur d'authentification 40 et dans le terminal 11.

Le point d'accès 70 authentifie le terminal 11 selon des procédures d'authentification définies par l'opérateur de ce réseau sans fil et inconnues à l'opérateur du terminal 11 mobile.

Dès que l'authentification est réussie, le point d'accès achemine la requête de connexion émanant du terminal 11 à destination du serveur de télévision 71 par l'intermédiaire du réseau sans fil tiers. Le serveur de télévision 71 transfère ensuite le certificat de session contenu dans la requête au serveur d'authentification 40. Le serveur d'authentification 40 effectue les vérifications nécessaires avant d'autoriser ou d'interdire l'accès du terminal 11 au serveur de télévision 71.

L'invention permet ainsi à l'opérateur de s'assurer de manière transparente et en temps réel, des droits aux services effectivement portés par chaque utilisateur lorsqu'il souhaite utiliser ledit service.

La présente invention est définie par les revendications annexées.

## Revendications

1. Procédé d'authentification d'un terminal (11) mobile dans leque
- le terminal entre en relation avec un serveur (13) d'applications d'un réseau de télécommunication mobile d'un opérateur dudit terminal à l'issue d'une procédure d'authentification (104) dudit terminal par l'intermédiaire d'un réseau (20) de télécommunication tiers, en cas de résultat positif de l'authentification (104),
procédé dans lequel:
- la procédure d'authentification (104) effectuée par un serveur (40) d'authentification du réseau de télécommunication mobile est basée sur un certificat d'autorisation de connexion du terminal au serveur d'applications,
- le certificat d'autorisation de connexion est généré par le serveur d'authentification à partir de données d'identifications réseau récupérées, lors de l'authentification (112) du terminal avec succès sur le réseau de télécommunication mobile ;
procédé dans lequel, lors de la génération du certificat d'autorisation de connexion:
- on ouvre (23) une session de connexion du terminal mobile au réseau de télécommunication mobile,
- le terminal mobile se fait authentifier (112) par le réseau mobile,
- en cas d'authentification positive (113) , on émet une requête (113) d'obtention du certificat d'autorisation de connexion du terminal à destination du serveur d'authentification ;
procédé dans lequel, lors de la procédure d'authentification (104) :
- on vérifie (101) un enregistrement du certificat d'autorisation de connexion dans une mémoire (18) du terminal,
- on transmet (102) du terminal un message de connexion à destination du serveur d'applications, ledit message comportant ledit certificat et les données d'identifications récupérées, lorsque la vérification (101) est positive,
- le serveur d'authentification authentifie (104) le terminal (11) à l'issue d'une comparaison entre les données contenues dans le message de connexion et celles enregistrées dans une mémoire dudit serveur ;
le procédé étant **caractérisé en ce que** le certificat d'autorisation de connexion est généré (115) par le serveur d'authentification, lorsque la mémoire de données du terminal comporte un enregistrement vide (111) ou lorsque le résultat de la comparaison est négatif (110), puis est transmis par le serveur d'authentification au terminal mobile et stocké (116) par le terminal mobile dans la mémoire (18).

2. Procédé selon la revendication 1, **caractérisé en ce que** le certificat d'autorisation de connexion est produit par le serveur d'authentification à partir de différents critères de sélection prédéfinis, ces critères étant notamment :
- le choix des caractères composant le certificat d'autorisation de connexion tel que l'utilisation des majuscules, minuscules, symboles et/ou chiffres, l'alternance de ces caractères étant obtenue de façon aléatoire, et
- la taille du certificat d'autorisation de connexion correspondant au nombre de caractères.

3. Procédé selon l'une des revendications précédentes, **caractérisé en ce que** :
- on associe dans la mémoire de données du serveur d'authentification un statut au certific d'autorisation de connexion généré, ce statut étant un indicateur de l'état des droits de connexions du terminal au serveur d'applications,
- un état dudit statut est mis à jour par l'intermédiaire d'une base de données centrale (41) d'abonnés du réseau mobile de l'opérateur.

4. Procédé selon la revendication précédente, **caractérisé en ce que** la mise à jour de l'état du statut est planifiée temporellement ou exécutée manuellement.

5. Procédé selon l'une des revendications précédentes, **caractérisé en ce que** le réseau tiers est un réseau sans fil de type Wi-Fi ou Wimax ou un réseau de télécommunication mobile d'un autre opérateur de téléphonie.

6. Procédé selon l'une des revendications précédentes, **caractérisé en ce que** le serveur d'applications est notamment un serveur de connexion à Internet, un serveur de télévision, un serveur de localisation géographique du terminal ou un serveur de télévision cryptée.

7. Procédé selon l'une des revendications précédentes, **caractérisé en ce que** le terminal mobile est notamment un téléphone mobile, un ordinateur individuel, un assistant personnel, une tablette ou un livre électronique.

8. Système de télécommunication, comportant un terminal mobile (11) et un serveur d'authentification (40), **caractérisé en ce que** ledit terminal mobile (11) comporte des moyens configurés de sorte à établir une connexion avec un serveur d'applications (13) à l'issue d'une procédure d'authentification, conformément au procédé selon l'une des revendications précédentes ; et **en ce que** ledit serveur d'authentification (40) comporte des moyens configurés de sorte à générer des certificats d'autorisation de connexion et à authentifier le terminal (11) à l'aide des certificats générés, conformément au procédé selon l'une des revendications 1 à 7.

## Patentansprüche

1. Authentifizierungsverfahren eines mobilen Endgeräts (11) wobei:
- sich das Endgerät mit einem Anwendungsserver (13) eines Mobilfunknetzes eines Betreibers des Endgeräts am Ende eines Authentifizierungsverfahrens (104) des Endgeräts verbindet, mittels eines Mobilfunknetzes (20) Dritter, bei positivem Ergebnis der Authentifizierung (104), Verfahren, wobei:
- das von einem Authentifizierungsserver (40) des Mobilfunknetzes durchgeführte Authentifizierungsverfahren (104) auf einem Verbindungsberechtigungszertifikat vom Endgerät an den Anwendungsserver basiert,
- das Verbindungsberechtigungszertifikat vom Authentifizierungsserver anhand von abgerufenen Netzidentifikationsdaten erzeugt wird, während der erfolgreichen Authentifizierung (112) des Endgeräts im Mobilfunknetz;
Verfahren, wobei während dem Generieren des Verbindungsberechtigungszertifikats:
- eine Verbindungssitzung des mobilen Endgeräts zum Mobilfunknetz geöffnet (23) wird,
- das mobile Endgerät vom Mobilfunknetz authentifiziert (112) wird,
- im Falle einer positiven Authentifizierung (113), eine Anfrage (113) zum Erhalt des Verbindungsberechtigungszertifikats des Endgeräts an den Authentifizierungsserver gesendet wird;
Verfahren, wobei während des Authentifizierungsverfahrens (104) :
- eine Aufzeichnung des Verbindungsberechtigungszertifikats in einem Speicher (18) des Endgeräts verifiziert (101) wird,
- vom Endgerät eine Verbindungsnachricht an den Anwendungsserver übertragen (102) wird, wobei die Nachricht das Zertifikat und die abgerufenen Identifikationsdaten aufweist, wenn die Verifizierung (101) positiv ist,
- der Authentifizierungsserver das Endgerät (11) authentifiziert (104), am Ende eines Vergleichs zwischen den Daten, die in der Verbindungsnachricht enthalten sind, und denen, die in einem Speicher des Servers aufgezeichnet sind;
wobei das Verfahren **dadurch gekennzeichnet ist, dass** das Verbindungsberechtigungszertifikat vom Authentifizierungsserver erzeugt (115) wird, wenn der Datenspeicher des Endgeräts eine leere Aufzeichnung (111) aufweist oder wenn das Ergebnis des Vergleichs negativ (110) ist, und dann vom Authentifizierungsserver an das mobile Endgerät übertragen und durch das mobile Endgerät im Speicher (18) gespeichert (116) wird.

2. Verfahren nach Anspruch 1, **dadurch gekennzeichnet, dass** das Verbindungsberechtigungszertifikat vom Authentifizierungsserver anhand verschiedener vorgegebener Auswahlkriterien erstellt wird, wobei diese Kriterien insbesondere Folgendes sind:
- die Wahl der Zeichen, aus denen das Verbindungsberechtigungszertifikat besteht, wie die Verwendung von Groß- und Kleinbuchstaben, Symbolen und/oder Zahlen, wobei die Reihenfolge dieser Zeichen nach dem Zufallsprinzip erfolgt, und
- die Größe des Verbindungsberechtigungszertifikats entspricht der Anzahl der Zeichen.

3. Verfahren nach einem der vorhergehenden Ansprüche, **dadurch gekennzeichnet, dass**:
- dem erzeugten Verbindungsberechtigungszertifikat ein Status im Datenspeicher des Authentifizierungsservers zugeordnet wird, wobei dieser Status ein Indikator des Zustands der Verbindungsrechte des Endgeräts zum Anwendungsserver ist,
- ein Zustand dieses Status mittels einer zentralen Datenbank (41) von Abonnenten des Mobilfunknetzes des Betreibers aktualisiert wird.

4. Verfahren nach dem vorhergehenden Anspruch, **dadurch gekennzeichnet, dass** die Aktualisierung des Zustands des Status zeitlich geplant oder manuell ausgeführt wird.

5. Verfahren nach einem der vorhergehenden Ansprüche, **dadurch gekennzeichnet, dass** das Fremdnetz ein drahtloses Netz vom Typ Wi-Fi oder Wimax oder ein Mobilfunknetz eines anderen Telefonanbieters ist.

6. Verfahren nach einem der vorhergehenden Ansprüche, **dadurch gekennzeichnet, dass** der Anwendungsserver insbesondere ein Internetverbindungsserver, ein TV-Server, ein Server für den geografischen Standort des Endgeräts oder ein verschlüsselter TV-Server ist.

7. Verfahren nach einem der vorhergehenden Ansprüche, **dadurch gekennzeichnet, dass** das mobile Endgerät insbesondere ein Mobiltelefon, ein Personalcomputer, ein PDA, ein Tablet oder ein E-Book ist.

8. Telekommunikationssystem beinhaltend, ein mobiles Endgerät (11) und einen Authentifizierungsserver (40), **dadurch gekennzeichnet, dass** das mobile Endgerät (11) derart konfigurierte Mittel aufweist, um eine Verbindung mit einem Anwendungsserver (13) am Ende eines Authentifizierungsverfahrens herzustellen, entsprechend dem Verfahren nach einem der vorhergehenden Ansprüche; und dass der Authentifizierungsserver (40) derart konfigurierte Mittel aufweist, um Verbindungsberechtigungszertifikate zu erzeugen und das Endgerät (11) unter Verwendung der erzeugten Zertifikate zu authentifizieren, entsprechend dem Verfahren nach einem der Ansprüche 1 bis 7.

## Claims

1. Method for authenticating a mobile terminal (11) wherein
- the terminal connects to an application server (13) of a mobile telecommunication network of an operator of said terminal at the end of a procedure for authenticating (104) said terminal by means of a third-party telecommunication network (20), in the event of a positive result of the authentication (104), method wherein:
- the authentication procedure (104) performed by an authentication server (40) of the mobile telecommunication network is based on a connection authorisation certificate from the terminal to the application server,
- the connection authorisation certificate is generated by the authentication server from network identification data retrieved, during the successful authentication (112) of the terminal on the mobile telecommunication network;
method wherein,
during the generation of the connection authorisation certificate:
- a session for connecting the mobile terminal to the mobile telecommunication network is opened (23),
- the mobile terminal is authenticated (112) by the mobile network,
- in the event of positive authentication (113), a request (113) is emitted to obtain the connection authorisation certificate from the terminal to the authentication server;
method wherein, during the authentication procedure (104):
- a record of the connection authorisation certificate in a memory (18) of the terminal is verified (101),
- a connection message is transmitted (102) to the application server from the terminal, said message including said certificate and the identification data retrieved, when the verification (101) is positive,
- the authentication server authenticates (104) the terminal (11) at the end of a comparison between the data contained in the connection message and those recorded in a memory of said server;
the method being **characterised in that** the connection authorisation certificate is generated (115) by the authentication server, when the data memory of the terminal includes an empty record (111) or when the result of the comparison is negative (110), then is transmitted by the authentication server to the mobile terminal and stored (116) by the mobile terminal in the memory (18).

2. Method according to claim 1, **characterised in that** the connection authorisation certificate is produced by the authentication server from various predefined selection criteria, these criteria being particularly:
- the choice of characters constituting the connection authorisation certificate such as the use of uppercase letters, lowercase letters, symbols and/or numbers, the alternation of these characters being obtained randomly, and
- the size of the connection authorisation certificate corresponding to the number of characters.

3. Method according to one of the preceding claims, **characterised in that**:
- in the data memory of the authentication server a status is associated with the connection authorisation certificate generated, this status being an indicator of the state of the connection rights of the terminal to the application server,
- a state of said status is updated by means of a central database (41) of subscribers of the mobile network of the operator.

4. Method according to the preceding claim, **characterised in that** the updating of the state of the status is scheduled temporally or executed manually.

5. Method according to one of the preceding claims, **characterised in that** the third-party network is a wireless network of Wi-Fi or Wimax type or a mobile telecommunication network of another telephony operator.

6. Method according to one of the preceding claims, **characterised in that** the application server is particularly an Internet connection server, a television server, a geographic location server of the terminal or an encrypted television server.

7. Method according to one of the preceding claims, **characterised in that** the mobile terminal is particularly a mobile telephone, a personal computer, a personal digital assistant, a tablet or an electronic book.

8. Telecommunication system, including a mobile terminal (11) and an authentication server (40), **characterised in that** said mobile terminal (11) includes means configured so as to establish a connection with an application server (13) at the end of an authentication procedure, in accordance with the method according to one of the preceding claims; and **in that** said authentication server (40) includes means configured so as to generate connection authorisation certificates and to authenticate the terminal (11) with the aid of the certificates generated, in accordance with the method according to one of claims 1 to 7.
